# FASCICULE DE BREVET EUROPEEN

(11) **EP 2 071 799 B1**
(45) Date de publication et mention de la délivrance du brevet: **21.03.2018**
(21) Numéro de dépôt: 08171133.5
(22) Date de dépôt: 09.12.2008
(51) Int. Cl.: H04L 29/06, G06F 21/62

(54) **Procédé et serveur pour l'accès a un coffre-fort électronique via plusieurs entités**
Verfahren und Server für den Zugang zu einem elektronischen Safe über mehrere Einheiten
Method and server for accessing an electronic strongbox via several entities

(30) Priorité: 10.12.2007 FR 0759698
(43) Date de publication de la demande: 17.06.2009
(73) Titulaire: Almerys, 63000 Clermont-Ferrand (FR)
(72) Inventeur: Tirbois, Jean-Marie, 63400, CHAMALIERES (FR); Chochois, Michaël, 35510, CESSON-SEVIGNE (FR)
(74) Mandataire: Cabinet Plasseraud

(56) Documents cités:
- EP-A- 1 677 486
- WO-A-02/103496
- WO-A-03/009111
- US-A- 5 991 414
- US-A1- 2003 084 350

## Description

La présente invention concerne le domaine des coffres-forts électroniques.

Les coffres-forts électroniques comprennent des espaces de stockage, à accès sécurisé, de données électroniques. Ils offrent une solution aux administrations, entreprises et aux particuliers pour stocker sous forme électronique des contenus divers, par exemple des bulletins de salaires, des relevés de comptes bancaires, des contrats d'assurance, des photos, etc. (cf. par exemple le site www.e-coffrefort.fr).

De tels coffres-forts électroniques sont généralement créés, puis gérés, par l'intermédiaire d'un serveur appartenant à un tiers de confiance et accessible depuis un grand nombre de terminaux (ordinateurs, téléphone mobile avec connexion WAP ou Internet, etc.) par les utilisateurs des coffres-forts électronique.

Quand une entreprise ou une administration ouvre un coffre-fort pour un utilisateur, elle lui fournit généralement un module de sécurité, par exemple matériel (carte à puce, clé USB, etc.), ayant des moyens de stockage notamment de données d'authentification.

Lorsque l'utilisateur souhaite accéder à son coffre-fort électronique, il se connecte depuis un terminal, par exemple sur une page html correspondante du site Web de l'entreprise, puis procède à une étape d'authentification à l'aide du module de sécurité.

L'étape d'authentification comprend généralement la lecture des données d'authentification stockées dans le module de sécurité pour permettre l'authentification de l'utilisateur et, en conséquence, autoriser ou non l'accès à un coffre-fort électronique.

Le document WO 03/009111 décrit un exemple de procédé de gestion d'un coffre-fort électronique où l'utilisateur est authentifié par des moyens biométriques et dans lequel l'utilisateur doit passer par une unique entité « SP CRM System » pour s'authentifier auprès du coffre-fort électronique.

Le document US-A-5991414 décrit un autre exemple de procédé d'accès à un moyen de stockage électronique où une paire de clés est attribuée à chaque utilisateur afin d'encrypter les données et de permettre l'authentification de l'utilisateur.

Un utilisateur peut bénéficier de plusieurs coffres-forts électroniques : un coffre-fort offert par son employeur, un autre par sa banque et/ou son assurance, par une administration, etc.

Néanmoins, il peut être souhaitable de faire profiter un utilisateur d'un même espace de stockage sécurisé de données électroniques ou même coffre-fort électronique, même lorsque ce service est offert à l'utilisateur par des entreprises ou administrations différentes, tant en permettant d'une part à ces dernières de gérer indépendamment de l'autre cette offre de service, et d'autre part en préservant la sécurité d'accès aux coffres-forts électroniques.

Suivant un premier aspect, l'invention propose un procédé de gestion de coffres-forts électroniques, comprenant une étape d'authentification d'un utilisateur requérant un accès à un coffre-fort, au moyen de données d'authentification dudit utilisateur, les données d'authentification à fournir par ledit utilisateur étant fonction d'une entité par l'intermédiaire de laquelle l'utilisateur requiert ledit accès.

La présente invention permet donc l'utilisation d'un même coffre-fort électronique par un utilisateur avec la sécurité d'accès nécessaire, lorsque ce service de fourniture de coffres-forts électroniques lui est mis à disposition par plusieurs entreprises ou administrations (correspondant aux entités respectives) à l'aide notamment de cartes à puce respectives comportant les données d'authentification. Les données d'authentification de l'utilisateur à fournir pour l'accès au coffre-fort par l'intermédiaire d'une première entité sont différentes des données d'authentification de l'utilisateur à fournir pour l'accès à ce même coffre-fort par l'intermédiaire d'une seconde entité. L'utilisateur peut avoir accès, en outre, à un coffre-fort électronique supplémentaire propre à l'entreprise ou l'administration correspondant à l'entité par l'intermédiaire de laquelle l'utilisateur requiert l'accès.

Les entreprises ou administrations peuvent stopper, indépendamment l'une de l'autre, leur service de fourniture de coffres-forts électronique vis-à-vis d'un utilisateur.

Dans un mode de réalisation, le procédé comprend une étape d'identification de l'entité par l'intermédiaire de laquelle l'utilisateur requiert l'accès au coffre-fort et une étape de détermination de données d'authentification à fournir en fonction de l'entité identifiée.

Dans un mode de réalisation, le procédé comprend, lorsque l'utilisateur requiert pour la première fois un accès au coffre-fort électronique par l'intermédiaire d'une entité parmi une première et une deuxième entité, une étape de transmission de données d'authentification à destination d'un terminal de l'utilisateur en vue du stockage desdites données d'authentification dans un module de sécurité matériel affecté à l'utilisateur et associé spécifiquement à ladite entité, les données d'authentification transmises en vue du stockage dans le module de sécurité matériel associé à une première entité étant différentes des données d'authentification transmises en vue du stockage dans le module de sécurité matériel associé à une deuxième entité.

Cette disposition permet de contrôler la fourniture des données d'authentification en fonction de l'entité par l'intermédiaire de laquelle l'utilisateur requiert l'utilisation du coffre-fort électronique.

Cette disposition permet en outre que l'accès au coffre-fort électronique, offert par chaque entreprise ou administration correspondant à une entité respective, soit délivré suite à une authentification forte de l'utilisateur auprès du serveur. Une carte donnée permet l'accès par l'intermédiaire d'une seule entité, permettant une sécurité accrue.

Dans un mode de réalisation, le procédé comprend une étape de signature et/ou de chiffrement, au moyen d'une clé de signature et/ou de chiffrement, de données à stocker sur requête dudit utilisateur dans ledit coffre-fort électronique, la clé utilisée lorsque l'utilisateur requiert un stockage dans ledit coffre-fort électronique par l'intermédiaire d'une première entité étant identique à celle utilisée lorsque l'utilisateur requiert un stockage dans ledit coffre-fort électronique par l'intermédiaire d'une deuxième entité.

Cette disposition permet d'exploiter des données électroniques stockées dans le coffre-fort de l'utilisateur indépendamment de l'entité par l'intermédiaire de laquelle les données ont été stockées et de l'entité par l'intermédiaire de laquelle les données sont ensuite exploitées.

Suivant un deuxième aspect, l'invention propose un serveur de gestion de coffres-forts électroniques, comprenant des moyens d'authentification conçus pour authentifier un utilisateur requérant un accès à un coffre-fort au moyen de données d'authentification fonction d'une entité par l'intermédiaire de laquelle l'utilisateur requiert ledit accès.

Suivant un troisième aspect, l'invention propose un programme d'ordinateur comprenant des instructions pour mettre en oeuvre les étapes, d'un procédé suivant le premier aspect de l'invention lors d'une exécution du programme sur un ordinateur.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un système mettant en oeuvre l'invention dans un mode de réalisation ;
- la figure 2 représente des étapes d'un procédé dans un mode de réalisation de l'invention.

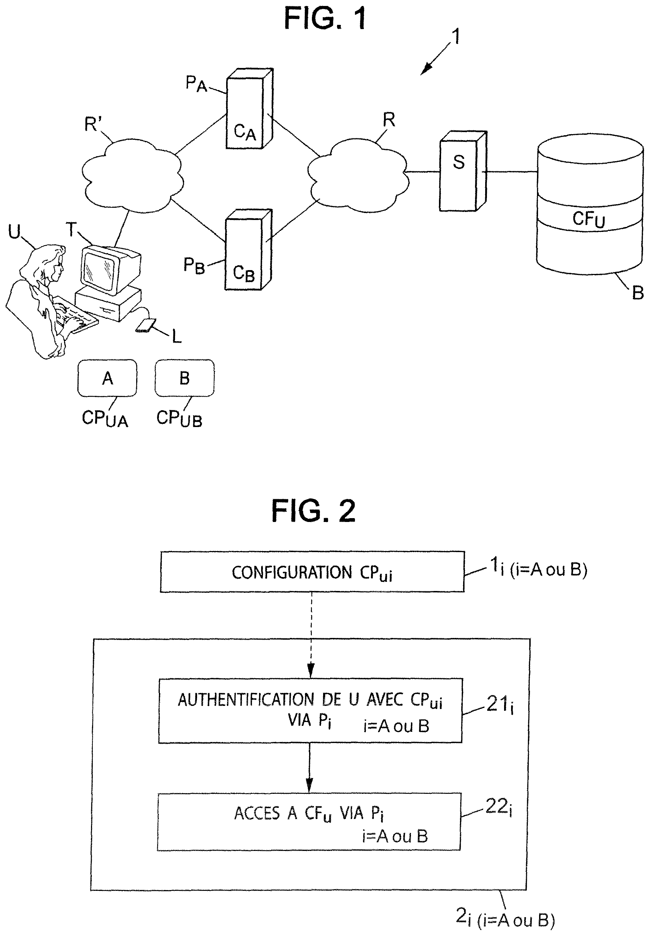

Sur la figure 1 est représenté un système 1 comprenant un serveur S relié, par un réseau de télécommunications R, à des serveurs P_{A} et P_{B} eux-mêmes reliés par un réseau de télécommunications R' à une pluralité de terminaux.

Le serveur S comprend une base B de stockage de données comportant des coffres-forts électroniques. Le serveur S est adapté pour offrir à des utilisateurs des services relatifs à l'utilisation de coffres-forts électroniques par l'intermédiaire de terminaux, des serveurs P_{A} ou P_{B}, des réseaux R et R' et du serveur S.

Parmi les terminaux permettant d'accéder à des coffres-forts électroniques figurent par exemple des ordinateurs personnels (« *PC* »), des téléphones mobiles, des assistants personnels, etc.

Sur la figure 1 est notamment représenté un terminal T utilisé par un individu nommé U. Le terminal T est par exemple un PC, muni d'un écran de visualisation et d'un clavier, et doté d'une interface de lecture et d'écriture sur carte à puce, interface qu'on nommera ci-dessous lecteur L de carte à puce.

Considérons qu'une entreprise A offre à l'utilisateur U un module de sécurité matériel, par exemple une carte à puce CP_{UA}, aux couleurs de l'entreprise A (comprenant par exemple son logo et son nom), en vue de donner accès à un coffre-fort électronique CF_{U} dédié à l'utilisateur dans la base de données B.

Cette carte à puce CP_{UA}, une fois configurée, permettra à l'utilisateur d'accéder à un coffre-fort CF_{U}, y consulter, modifier, supprimer et/ou y stocker des données électroniques.

En référence à la figure 2, dans une étape 1_{A} de configuration de la carte à puce CP_{UA}, l'utilisateur U se connecte depuis le terminal T au portail Web de l'entreprise A hébergé par le serveur P_{A}. S'ensuit une phase d'échanges entre une application C_{A} du portail Web de l'entreprise A et l'utilisateur U via le terminal T.

Au cours de cette phase d'échanges, l'utilisateur indique son souhait d'utiliser son coffre-fort électronique. Il est alors demandé que l'utilisateur U insère, dans le lecteur L de carte à puce, la carte à puce CP_{UA} remise par l'entreprise A.

La requête d'utilisation du coffre-fort électronique CF_{U} de l'utilisateur U est alors transférée, par l'application du portail Web de l'entreprise A, du serveur P_{A} au serveur S.

Le serveur S transmet alors au terminal T via le serveur P_{A} :
- un certificat d'authentification CAUT_{UA} et une paire de clés associée (une clé publique et une clé privée), destinés à permettre ultérieurement l'authentification de l'utilisateur U auprès du serveur S, en vue d'autoriser ou non l'accès au coffre-fort CF_{U} ;
- un certificat de signature CSIG_{U} et une paire de clés associée, destinés à la signature des données à stocker dans le coffre-fort électronique CF_{U} ; et
- un certificat de chiffrement CCHH_{U} et la paire de clés associée, destinés au chiffrement/déchiffrement des données à stocker dans le coffre-fort électronique CF_{U}.

Ces certificats et clés associés sont chargés dans la carte à puce CP_{UA} par l'intermédiaire du lecteur de carte à puce L.

Ces certificats et les clés associées, dédiés à l'utilisateur U, proviennent d'une (ou plusieurs) autorité d'enregistrement et de certification faisant office de tiers de confiance. Dans un mode de réalisation, le serveur S lui-même est ce tiers de confiance.

La carte à puce CP_{UA} maintenant configurée permettra à l'utilisateur U d'accéder à son coffre-fort CF_{U} et de l'utiliser.

Dans un mode de réalisation, la carte à puce CP_{UA} permet d'avoir accès non seulement au coffre-fort CF_{U}, qui est par exemple destiné à stocker les éléments personnels de l'utilisateur, mais également à un autre coffre-fort destiné à stocker des données relatives aux échanges entre l'entreprise A et l'utilisateur U (par exemple si l'utilisateur U est employé de l'entreprise A, des données professionnelles seront stockées dans cet autre coffre-fort). Seule la carte CP_{UA} permet d'avoir accès à cet autre coffre-fort.

On notera que, préalablement à l'enregistrement des certificats sur la carte à puce CP_{UA}, des modalités particulières d'identification de l'utilisateur sont mises en oeuvre en fonction du niveau de sécurité attendu par le serveur P_{A} suivant les modes de réalisation. L'identité de utilisateur peut par exemple être vérifiée lors d'une rencontre formelle (face à face) avec l'utilisateur et/ou à partir de la délivrance de données considérées comme suffisamment personnelles.

Considérons à présent qu'une entreprise B offre ultérieurement à l'utilisateur U une carte à puce CP_{UB} aux couleurs de l'entreprise B en vue également de donner accès au coffre-fort électronique CF_{U} dédié à l'utilisateur U.

En référence à la figure 2, dans une étape 1_{B} de configuration de la carte à puce CP_{UB}, l'utilisateur U se connecte depuis le terminal T (ces opérations pourraient bien sur être menées depuis un autre terminal muni d'un dispositif pour écrire des données dans une carte à puce) au portail Web de l'entreprise B hébergé par le serveur P_{B}.

Dans une phase d'échanges entre une application du portail Web de l'entreprise B et l'utilisateur U, l'utilisateur U indique son souhait d'utiliser son coffre-fort électronique et insère dans le lecteur L de carte à puce la carte à puce CP_{UB}.

La requête d'utilisation du coffre-fort électronique de l'utilisateur U est alors transférée, par l'application du portail Web de l'entreprise B, du serveur P_{B} au serveur S.

Le serveur S transmet alors au terminal T via le serveur P_{B} un certificat d'authentification CAUT_{UB} et une paire de clés associée, le certificat de signature CSIG_{U} et sa paire de clés associée, et le certificat de chiffrement CCHH_{U} et sa paire de clés associée. Ces certificats et clés associés sont chargés dans la carte à puce CP_{UB} par l'intermédiaire du lecteur de carte à puce L.

Les certificats de signature et de chiffrement et les clés associées, stockés dans les deux cartes à puce détenues par l'utilisateur U pour l'utilisation du coffre-fort CF_{U}, sont ainsi identiques. En revanche, les certificats d'authentification de l'utilisateur U et les clés associées stockés dans ces deux cartes à puce, pour permettre l'authentification de l'utilisateur U auprès du serveur S lorsqu'il souhaite accéder au coffre-fort, sont eux, distincts.

La carte à puce CP_{UB} maintenant configurée permettra à l'utilisateur U d'accéder à son coffre-fort CF_{U} et de l'utiliser.

Dans un mode de réalisation, la carte à puce CP_{UB} remise à l'utilisateur permet d'avoir accès non seulement au coffre-fort CF_{U}, mais également à un coffre-fort destiné à stocker des données relatives aux échanges entre l'entreprise B et l'utilisateur U. Seule la carte CP_{UB} permet d'avoir accès à ce coffre-fort.

L'étape 2_{A} ci-dessous décrit les opérations d'accès et d'utilisation du coffre-fort CF_{U} à l'aide de la carte à puce CP_{UA}.

L'utilisateur U se connecte au serveur S par l'intermédiaire de l'application C_{A} du portail de l'entreprise A et insère sa carte à puce CP_{UA} dans le lecteur L de carte à puce.

Une phase d'authentification forte de l'utilisateur U par le serveur S a alors lieu (étape 21_{A}), sur la base notamment du certificat d'authentification CAUT_{UA} et des clés associées. Les données d'authentification sont utilisables après fourniture au lecteur L par l'utilisateur U du code d'accès de la carte à puce CP_{UA}.

Dans l'étape 21_{A}, par exemple, le serveur S fournit un aléa au terminal T. La carte à puce CP_{UA} signe l'aléa avec la clé secrète d'authentification de l'utilisateur U stockée dans la carte à puce CP_{UA}, puis le terminal T transmet l'aléa ainsi chiffré au serveur S (indiquant donc les données d'authentification de l'utilisateur U), qui le déchiffre à l'aide de la clé publique d'authentification de l'utilisateur U. S'il retrouve l'aléa initialement transmis au terminal T, l'utilisateur U est bien authentifié.

Cette étape a par exemple lieu sous forme d'une session HTTPS.

Pour rappel, l'authentification forte permet de vérifier l'identité de l'utilisateur sur la base d'au moins deux facteurs parmi ce qu'il sait (mot de passe, code PIN), ce qu'il possède (carte à puce, certificat électronique), ce qu'il est (paramètre biométrique tel qu'empreinte digitale, main, visage, etc.).

Une fois l'utilisateur U authentifié par le serveur S, il peut procéder au stockage de nouvelles données électroniques chiffrées et/ou signées à l'aide des clés de signature et de chiffrement stockées sur la carte à puce CP_{A}, et/ou à la modification, consultation ou suppression de données déjà stockées dans le coffre-fort CF_{U} (étape 22_{A}).

L'étape 2_{B} ci-dessous décrit les opérations d'accès et d'utilisation du coffre-fort CF_{U} à l'aide de la carte à puce CP_{UB}.

L'utilisateur U se connecte au serveur S par l'intermédiaire de l'application C_{B} du portail de l'entreprise B et insère sa carte à puce CP_{UB} dans le lecteur L de carte à puce.

Une phase d'authentification forte de l'utilisateur U par le serveur S a alors lieu (étape 21_{B}), sur la base notamment du certificat d'authentification CAUT_{UB}, des clés associées et du code d'accès fourni par l'utilisateur U pour utiliser les données d'authentification stockées sur la carte à puce CP_{UB}.

Une fois l'utilisateur U authentifié par le serveur S, l'utilisateur U peut procéder au stockage de nouvelles données électroniques chiffrées et/ou signées à l'aide des clés de signature et de chiffrement stockées sur la carte à puce CP_{B}, et/ou à la modification, la consultation ou suppression de données déjà stockées dans le coffre-fort CF_{U} (étape 22_{B}).

Quelle que soit la carte à puce CP_{UA} ou CP_{UB} précédemment utilisée pour stocker des données dans le coffre-fort CF_{U}, l'utilisateur peut déchiffrer ces données en accédant au coffre-fort par la carte à puce CP_{UA} aussi bien que par la carte à puce CP_{UB}.

Les données d'authentification à fournir par l'utilisateur au serveur S qui permettront l'accès au coffre-fort CF_{U} sont donc fonction du portail par lequel il accède, et de la carte à puce utilisée.

La carte à puce à utiliser est une carte à puce associée au portail, les données d'authentification d'utilisateur qu'elle contient étant propres à ce portail et ne pouvant être utilisées pour l'accès au coffre-fort via un autre portail.

En d'autres termes, avant de procéder à l'authentification de l'utilisateur à partir des données d'authentification qu'il reçoit, le serveur S identifie l'entité (i.e. le portail) par l'intermédiaire de laquelle l'utilisateur requiert un accès à un coffre-fort CFU, puis détermine en fonction de l'entité identifiée les données d'authentification au moyen desquelles cette authentification doit s'effectuer.

Selon les exemples décrits plus haut, le serveur vérifie la signature de l'aléa reçu de la carte à puce à l'aide de la clé publique d'authentification de l'utilisateur U qui est associée à l'entité identifiée. En cas d'authentification réussie, c'est-à-dire si le serveur retrouve après déchiffrement l'aléa initialement transmis au terminal T, l'utilisateur U est bien authentifié et le serveur S autorise l'accès au coffre fort CF_{U}.

En conséquence, si l'utilisateur requiert l'accès au coffre-fort CF_{U} par le portail de l'entreprise A et utilise la carte à puce CP_{UB}, l'accès sera refusé, et vice-versa.

Dans le mode de réalisation décrit en référence aux figures, l'invention est mise en oeuvre en considérant l'accès à un même coffre-fort par l'intermédiaire de deux entités distinctes, représentées par les serveurs P_{A} et P_{B}. L'invention peut bien sûr être mise en oeuvre avec un nombre d'entités supérieur à deux.

Toutes ou partie des étapes mises en oeuvre par le terminal T sont effectuées dans un mode de réalisation suite à l'exécution d'instructions de programmes d'ordinateur sur des moyens de calcul du terminal T. Dans le mode de réalisation décrit en référence aux figures, le terminal délègue des opérations de signature, chiffrement/déchiffrement à la carte à puce par l'intermédiaire du lecteur de carte à puce du terminal.

Similairement, tout ou partie des étapes mises en oeuvre par le serveur S sont effectuées dans un mode de réalisation suite à l'exécution d'instructions de programmes d'ordinateur sur des moyens de calcul du serveur S.

Lorsque l'entreprise A souhaite stopper le service de fourniture de coffre-fort électronique pour l'utilisateur U, elle requiert, auprès de l'autorité de confiance concernée, la révocation du certificat d'authentification CAUT_{UA} dédié à l'utilisateur U. L'individu a alors accès à son coffre-fort CF_{U} uniquement par le portail de l'entreprise B, à l'aide de la carte à puce CP_{UB}.

L'invention permet de simplifier la gestion de l'accès au coffre-fort des utilisateurs. Ces derniers peuvent accéder à un même coffre-fort et exploiter les données qui y sont stockées à l'aide de cartes à puce respectives, fournies par différentes entreprises ou administrations leur proposant ce service, et configurées chacune avec des données d'authentification qui leur sont propres.

## Revendications

1. Procédé de gestion de coffres-forts électroniques, comprenant une étape d'authentification d'un utilisateur (U) requérant un accès à un coffre-fort (CF_{U}) au moyen de données d'authentification dudit utilisateur, les données d'authentification, à fournir par ledit utilisateur, étant fonction d'une entité (P_{A}; P_{B}) par l'intermédiaire de laquelle l'utilisateur requiert ledit accès ;
ledit procédé comprenant en outre, lorsque l'utilisateur (U) requiert pour la première fois un accès au coffre-fort électronique (CF_{U}) par l'intermédiaire d'une entité parmi une première (P_{A}) et une deuxième (P_{B}) entité, une étape de transmission de données d'authentification à destination d'un terminal (T) de l'utilisateur (U) en vue du stockage desdites données d'authentification dans un module de sécurité matériel (CP_{UA}, CP_{UB}) affecté à l'utilisateur et associé spécifiquement à ladite entité, les données d'authentification transmises en vue du stockage dans le module de sécurité matériel associé à une première entité étant différentes des données d'authentification transmises en vue du stockage dans le module de sécurité matériel associé à une deuxième entité.

2. Procédé selon la revendication 1, comprenant une étape d'identification de l'entité (P_{A} ; P_{B}) par l'intermédiaire de laquelle l'utilisateur (U) requiert l'accès au coffre-fort et une étape de détermination des données d'authentification à fournir en fonction de l'entité identifiée.

3. Procédé selon l'une quelconque des revendications 1 à 2, comprenant une étape de signature et/ou de chiffrement, au moyen d'une clé de signature et/ou de chiffrement, de données à stocker sur requête dudit utilisateur (U) dans ledit coffre-fort électronique (CF_{U}), la clé utilisée lorsque l'utilisateur requiert un stockage dans ledit coffre-fort électronique (CF_{U}) par l'intermédiaire d'une première entité (P_{A}) étant identique à celle utilisée lorsque l'utilisateur requiert un stockage dans ledit coffre-fort électronique (CF_{U}) par l'intermédiaire d'une deuxième entité (P_{B}).

4. Serveur (S) de gestion de coffres-forts électroniques, comprenant des moyens d'authentification conçus pour authentifier un utilisateur requérant un accès à un coffre-fort au moyen de données d'authentification dudit utilisateur, les données d'authentification, à fournir par ledit utilisateur, étant fonction d'une entité (P_{A} ; P_{B}) par l'intermédiaire de laquelle l'utilisateur requiert ledit accès ;
le serveur comprenant en outre des moyens de configuration pour, lorsque l'utilisateur (U) requiert pour la première fois un accès au coffre-fort électronique (CF_{U}) auprès du serveur par l'intermédiaire d'une entité parmi des première (P_{A}) et deuxième (P_{B}) entités, transmettre des données d'authentification à destination d'un terminal de l'utilisateur en vue du stockage desdites données d'authentification dans un module de sécurité matériel (CP_{UA}, CP_{UB}) affecté à l'utilisateur et associé spécifiquement à ladite entité, les données d'authentification transmises en vue du stockage dans le module de sécurité matériel associé à une première entité étant différentes des données d'authentification transmises en vue du stockage dans le module de sécurité matériel associé à une deuxième entité.

5. Serveur selon la revendication 4, comprenant des moyens d'identification de l'entité par l'intermédiaire de laquelle l'utilisateur requiert l'accès au coffre-fort et des moyens de détermination de données d'authentification à fournir en fonction de l'entité identifiée.

6. Programme d'ordinateur comprenant des instructions pour mettre en oeuvre les étapes d'un procédé selon l'une des revendications 1 à 3 lors d'une exécution du programme sur un ordinateur.

## Patentansprüche

1. Verfahren zur Verwaltung von elektronischen Safes, umfassend einen Schritt der Authentifizierung eines Nutzers (U), der einen Zugang zu einem Safe (CF_{U}) verlangt, mit Hilfe von Nutzerauthentifizierungsdaten, wobei die vom Nutzer bereitzustellenden Authentifizierungsdaten von einer Einheit (P_{A}; P_{B}) abhängen, über die der Nutzer den Zugang verlangt;
wobei das Verfahren, wenn der Nutzer (U) erstmalig einen Zugang zum elektronischen Safe (CF_{U}) über eine Einheit aus einer ersten (P_{A}) und einer zweiten (P_{B}) Einheit verlangt, ferner einen Schritt der Übertragung von Authentifizierungsdaten an ein Endgerät (T) des Nutzers (U) zwecks Speicherung der Authentifizierungsdaten in einem dem Nutzer zugeordneten und spezifisch mit der Einheit verknüpften Hardware-Sicherheitsmodul (CP_{UA}, CP_{UB}) umfasst, wobei sich die Authentifizierungsdaten, die zwecks Speicherung in dem mit einer ersten Einheit verknüpften Hardware-Sicherheitsmodul übertragen werden, von den Authentifizierungsdaten, die zwecks Speicherung in dem mit einer zweiten Einheit verknüpften Hardware-Sicherheitsmodul übertragen werden, unterscheiden.

2. Verfahren nach Anspruch 1, umfassend einen Schritt der Identifizierung der Einheit (P_{A}; P_{B}), über die der Nutzer (U) den Zugang zum Safe verlangt, und einen Schritt der Bestimmung der in Abhängigkeit von der identifizierten Einheit bereitzustellenden Authentifizierungsdaten.

3. Verfahren nach einem der Ansprüche 1 bis 2, umfassend einen Schritt der Unterschrift und/oder der Chiffrierung von Daten, die auf Verlangen des Nutzers (U) im elektronischen Safe (CF_{U}) zu speichern sind, mittels eines Unterschrifts- und/oder Chiffrierschlüssels, wobei der Schlüssel, der genutzt wird, wenn der Nutzer eine Speicherung im elektronischen Safe (CF_{U}) über eine erste Einheit (P_{A}) verlangt, identisch ist mit demjenigen, der genutzt wird, wenn der Nutzer eine Speicherung im elektronischen Safe (CF_{U}) über eine zweite Einheit (P_{B}) verlangt.

4. Server (S) zur Verwaltung von elektronischen Safes, umfassend Authentifizierungsmittel, die dazu gestaltet sind, einen Nutzer, der Zugang zu einem Safe verlangt, mit Hilfe von Nutzerauthentifizierungsdaten zu authentifizieren, wobei die vom Nutzer bereitzustellenden Authentifizierungsdaten von einer Einheit (P_{A}; P_{B}) abhängen, über die der Nutzer den Zugang verlangt;
wobei der Server ferner Konfigurationsmittel umfasst, um, wenn der Nutzer (U) erstmalig einen Zugang zum elektronischen Safe (CF_{U}) beim Server über eine Einheit aus einer ersten (P_{A}) und einer zweiten (P_{B}) Einheit verlangt, Authentifizierungsdaten an ein Endgerät des Nutzers zwecks Speicherung der Authentifizierungsdaten in einem dem Nutzer zugeordneten und spezifisch mit der Einheit verknüpften Hardware-Sicherheitsmodul (CP_{UA}, CP_{UB}) zu übertragen, wobei sich die Authentifizierungsdaten, die zwecks Speicherung in dem mit einer ersten Einheit verknüpften Hardware-Sicherheitsmodul übertragen werden, von den Authentifizierungsdaten, die zwecks Speicherung in dem mit einer zweiten Einheit verknüpften Hardware-Sicherheitsmodul übertragen werden, unterscheiden.

5. Server nach Anspruch 4, umfassend Mittel zur Identifizierung der Einheit, über die der Nutzer den Zugang zum Safe verlangt, und Mittel zur Bestimmung von in Abhängigkeit von der identifizierten Einheit bereitzustellenden Authentifizierungsdaten.

6. Computerprogramm, umfassend Anweisungen zur Umsetzung der Schritte eines Verfahrens nach einem der Ansprüche 1 bis 3 bei einer Ausführung des Programms auf einem Computer.

## Claims

1. A method of managing electronic safes comprising a step of:
authenticating a user (U) requesting access to an electronic safe (CF_{U}), via a web portal among a plurality of web portals hosted respectively on a plurality of servers, by means of authentication data of said the user ;
wherein the authentification data, to be provided by said user" are dependant of an entity (P_{A}; P_{B}) by means of which the user is requesting said access;
wherein said method further comprises, when the user (U) requests for the first time an access to the electronic safe by means of an entity among the first (P_{A}) and the second (P_{B}) entities, a step of transmitting authentication data to a terminal (T) of the user (U) in view of storing said authentication data in a hardware security module (CP_{UA}, CP_{UB}) assigned to the user and associated specifically with said first entity,
wherein the authentication data transmitted in view of being stored in the hardware security module associated with the first web portal is different from authentication data transmitted in view of being stored in the hardware security module associated with a second entity.

2. The method according to claim 1, wherein the method further comprises:
identifying the web portal, among the plurality of web portals, by means of which the user is requesting access to the safe; and
determining the authentication data depending on the identified web portal.

3. The method according to one of claims 1 to 2, comprising a step ofsigning and/or encrypting, by means of a signature and/or encryption key, the authentication data to be stored on request of said user (U) in said electronic safe (CF_{U}),
wherein the key used when the user requests storage in said electronic safe (CF_{U}) by means of a first entity (P_{A}) is identical to the key used when the user requests storage in said electronic safe (CF_{U}) by means of a second entity (P_{B}).

4. An electronic safe (S) management server, comprising authentication means designed to authenticate a user requesting access to a safe by means of the authentication data of said user,
wherein said authentification data are dependant of the entity (P_{A}, P_{B}) by means of which the user is requesting said access;
wherein the server further comprises configuration means for, when the user (U) requests for the first time an access to the electronic safe by means of an entity among the first (P_{A}) and the second (P_{B}) entities, transmitting authentication data to a terminal of the user in view of storing said authentication data in a hardware security module (CP_{UA}, CP_{UB}) assigned to the user and associated specifically with said first entity, wherein the authentication data transmitted in view of being stored in the hardware security module associated with the first web portal is different from authentication data transmitted in view of being stored in the hardware security module associated with a second entity.

5. The electronic safe management server according to claim 4, further comprising:
means of identifying the entity by means of which the user is requesting access to the electronic safe; and
means of determining authentication data depending on the identified entity.

6. A computer program comprising instructions for implementing the steps of a method according to claims 1 to 3 during execution of said program on a computer.
